(19) Europäisches Patentamt
European Patent Office
Office européen des brevets

(11) Veröffentlichungsnummer: **0 224 687**
**B1**

(12) # EUROPÄISCHE PATENTSCHRIFT

(45) Veröffentlichungstag der Patentschrift: **02.08.89**

(51) Int. Cl.⁴: **C 09 B 57/04,** C 09 B 26/02, C 08 K 5/34, C 09 D 7/12

(21) Anmeldenummer: **86114125.7**

(22) Anmeldetag: **13.10.86**

(54) **Metallkomplexpigmente.**

(30) Priorität: **23.10.85 DE 3537625**

(43) Veröffentlichungstag der Anmeldung: **10.06.87 Patentblatt 87/24**

(45) Bekanntmachung des Hinweises auf die Patenterteilung: **02.08.89 Patentblatt 89/31**

(84) Benannte Vertragsstaaten: **CH DE FR GB IT LI**

(56) Entgegenhaltungen:
**EP-A-0 025 908**
**EP-A-0 036 834**
**DE-A-2 504 321**
**FR-A-2 243 235**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Neeff, Rütger, Dr., verstorben (DE)**
Erfinder: **Rolf, Meinhard, Dr., Berta- von- Suttner-Strasse 24, D-5090 Leverkusen (DE)**
Erfinder: **Müller, Walter, Dipl.- Ing., Pfarrer- Klein-Strasse 3, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 224 687 B1**

LIBER, STOCKHOLM 1989

**Beschreibung**

Aus der FR-A-2 243 235 sind Metallkomplexpigmente bekannt, die sich von einem in 3-Stellung durch eine Azomethingruppe substituierten 1-Oxoisoindolenin ableiten. Die DE-A-2 504 321 beschreibt Azomethinpigmente, die sich von den unten angegebenen erfindungsgemäßen Pigmenten der Formel I dadurch unterscheiden, daß sie maximal eine N-substituierte Aminocarbonylgruppe aufweisen.

Die Erfindung betrifft Metallkomplexpigmente der Formel

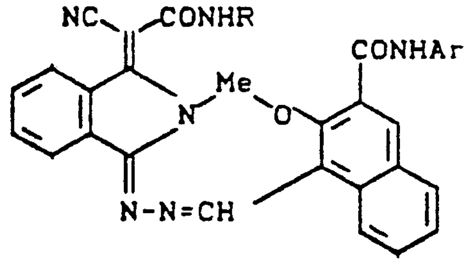

I

in der

Me = Zn, Cu, Co, bevorzugt Ni,
R = Alkyl, Cycloalkyl, Aralkyl, Aryl, Hetaryl, wobei die genannten Reste substituiert sein können,
Ar = gegebenenfalls substituiertes Aryl.

Alkyl (R) steht bevorzugt für $C_1$-$C_6$-Alkyl, z. B. $-CH_3$, $-C_2H_5$, $-C_3H_7$, $-C_4H_9$.
Cycloalkyl (R) steht bevorzugt für $C_3$-$C_7$-Cycloalkyl, z. B. Cyclopentyl und Cyclohexyl.
Aralkyl (R) steht bevorzugt für Phenyl- und Naphthyl-$C_1$-$C_4$-alkyl, z. B. Benzyl.
Aryl (R, Ar) steht bevorzugt für Phenyl und Naphthyl.
Hetaryl (R) steht bevorzugt für Benzimidazol-2-yl und Benzthiazol-2-yl und 4-Chinazolon-2-yl.

Die vorstehend genannten Aryl- und Aralkylreste (im Arylteil) können z. B. durch Halogen wie Cl, Br, F, $-NO_2$, -CN, $-CF_3$, $C_1$-$C_4$-Alkyl, insbesondere Methyl und Ethyl, $C_1$-$C_4$-Alkoxy, insbesondere Methoxy und Ethoxy, Carbamoyl, Mono- und Di-$C_1$-$C_4$-alkyl-carbamoyl, $C_1$-$C_4$-Alkylamino, insbesondere Acetylamino, substituiert sein.

Bevorzugte Reste Ar sind: Phenyl, α-Naphthyl, 2-Methylphenyl, 4-Methylphenyl, 3-Nitrophenyl, 2,5-Dimethoxy-4-chlorphenyl, 2,5-Dimethoxyphenyl, 4-Chlorphenyl, 2,4-Dimethoxy-5-chlorphenyl, 2-Methyl-5-chlorphenyl, 2-Methoxyphenyl, 2,4-Dimethylphenyl, 2-Ethoxyphenyl, 2-Methyl-4-chlorphenyl, 4-Acetylaminophenyl.

Die Herstellung der erfindungsgemäßen Pigmente erfolgt z. B. durch Umsetzung von Isoindolhydrazonen der Formel

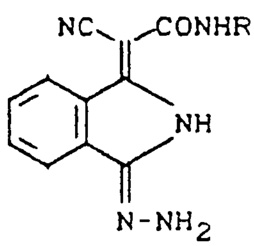

II

in der R die zu Formel I angegebene Bedeutung hat mit β-Oxynaphthoesäurederivaten der Formel

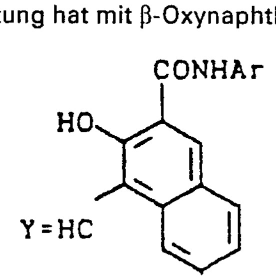

III

in der Y für O oder N-Ph steht, wobei Ph gegebenenfalls substituiertes Phenyl bezeichnet und Ar die zu Formel I angegebene Bedeutung hat,

zum Liganden der Formel

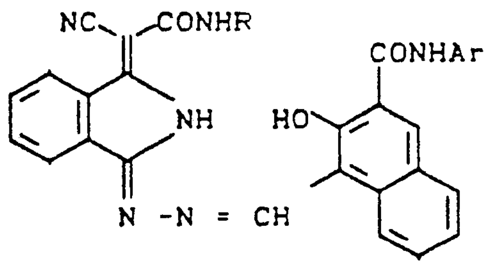

IV

der gegebenenfalls nach Isolierung mit einer Verbindung $MeX_2$ (Me = Zn, Cu, Co, Ni; X bzw. $X_2$ vorzugsweise = Acetat, Formiat, Chlorid, Sulfat) umgesetzt wird.

Alternativ kann die Umsetzung von II mit III in Gegenwart von $MeX_2$ durchgeführt werden, wobei dann direkt die Pigmente I anfallen.

Weiterhin sind die Pigmente I z. B. durch Umsetzung des Isoindols

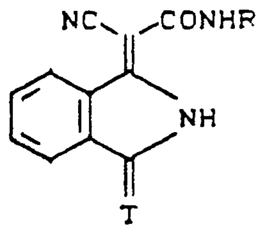

V

in der T für O, NH, NZ steht, wobei Z gegebenenfalls substituiertes Phenyl bezeichnet und R die zu Formel I angegebene Bedeutung hat mit dem Hydrazon

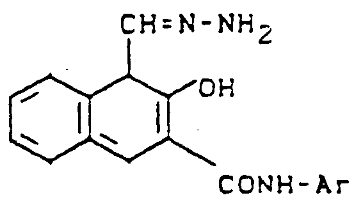

VI

in der Ar die zu Formel I angegebene Bedeutung hat bei anschließender oder gleichzeitiger Metallisierung zugänglich.

Die Umsetzungen erfolgen in organischen Lösungsmitteln, z. B. Dimethylformamid, n-Butanol, Glykolmonomethylether, vorzugsweise bei Temperaturen zwischen 50 und 150°C.

Die Pigmente I treten zum Teil in mehreren Modifikationen auf, die durch anschließendes Tempern bei höheren Temperaturen oder durch Formierungsprozesse erhalten werden können.

Die Pigmente der Formel I eignen sich aufgrund ihrer guten Pigmenteigenschaften für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischungen mit anderen Stoffen können z. B. solche mit anorganischem Weißpigmenten wie Titandioxid (Rutil) verstanden werden. Zubereitungen sind z. B. Flunpasten mit organischen Flüssigkeiten und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Insbesondere eignen sich die neuen Pigmente zum Pigmentieren von makromolekularen organischen Stoffen.

Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z. B. Polyethylen oder Polyamide, Superpolyamide, Polymerisate und Mischpolymerisate aus Acrylestern oder Methacrylestern, Acrylnitril, Acrylamid, Butadien, Styrol sowie Polyurethane und Polycarbonate. Die mit dem beanspruchten Pigmenten pigmentierten Stoffe können in beliebiger Form vorliegen. Wegen ihrer hohen Transparenz und Wetterechtheit eignen sich die Pigmente der Formel I besonders zum Einsatz in Automobillacken, insbesondere für Metalliclackierungen.

Die Pigmente der Formel I sind ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig, in plastischen Massen gut verteilbar und insbesondere ausgezeichnet lichtecht und migrationsecht.

**Beispiel 1**

26,2 g 1-(Cyano-phenylcarbamoyl-methylen)-3-hydrazonoisoindolenin und 26,5 g 2-Hydroxy-3-N-phenylcarbamoylnapthalin-1-aldehyd werden in 280 ml Dimethylformamid 1 Stunde bei 100°C gerührt und dann mit 22,6 g Nickelacetat · 4 $H_2O$ versetzt. Man rührt 3 Stunden bei 120°C nach, saugt das ausgeschiedene Pigment bei 80°C ab und wäscht mit Methanol. Nach dem Trocknen werden 49,8 g (91 % d.Th.) des Marron-Pigmentes der Formel

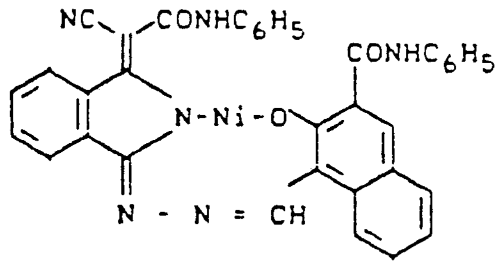

erhalten. Schmp. > 360°C

$C_{35}H_{22}N_6O_3Ni$ (633.1)

| | | | | |
|---|---|---|---|---|
| Ber. | C 66.40 | H 3.47 | N 13,27 | Ni 9.27 |
| Gef. | C 66.3 | H 3.6 | N 13,1 | Ni 9.3 |

Verfährt man nach Beispiel 1 und ersetzt das Nickelacetat durch eine entsprechende Menge eines in der folgenden Tabelle aufgeführten Metallacetate, erhält man Pigmente mit den dort angegebenen Farbtönen.

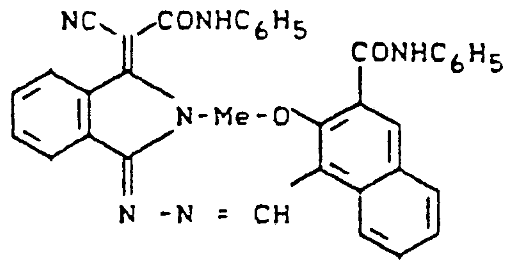

| Beispiel | Me | Farbton |
|---|---|---|
| 2 | $Cu^{2+}$ | braun |
| 3 | $Zn^{2+}$ | rot |
| 4 | $Co^{2+}$ | violett |

**Beispiel 5**

22,6 g 1-(Cyano-methylcarbamoyl-methylen)-3-iminoisoindolenin und 28,9 g 2-Hydroxy-3-N-phenylcarbamoylnaphthalin-1-aldehydhydrazon werden in 300 ml Dimethylformamid 1 Stunde bei 100°C verrührt und dann innerhalb 15 Minuten mit 25,0 g Nickelacetat · $4H_2O$ versetzt. Man rührt 3 Stunden bei 120°C nach, saugt das abgeschiedene Pigment bei 80°C ab und wäscht mit Methanol. Nach dem Trocknen werden so 48,5 g (85 % d.Th.) des Rotpigmentes der Formel

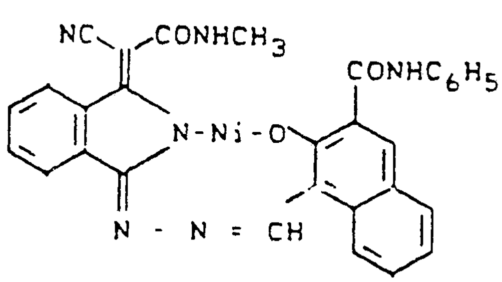

erhalten.

$C_{30}H_{20}N_6O_3Ni$ (571.01)

| | | | | |
|---|---|---|---|---|
| Ber.: | C 63.10 | H 3.50 | N 14.71 | Ni 10.28 |
| Gef: | C 62.9 | H 3.7 | N 14.6 | Ni 10.3 |

Nach dem in Beispiel 5 genannten Verfahren erhält man bei Einsatz entsprechend variierter 3-Imino-isolenine die in der folgenden Tabelle aufgeführten Pigmente mit den angegebenen Farbtönen.

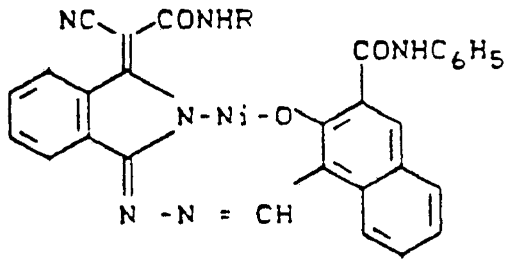

| Beispiel | R | Farbton |
|---|---|---|
| 6 | $C_2H_5$ | Rot |
| 7 | $n\text{-}C_3H_7$ | Rot |
| 8 | $CH_2C_6H_5$ | gelbstichiges Rot |
| 9 | 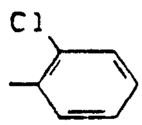 | blaustichiges Rot |
| 10 | 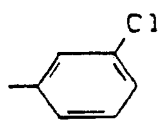 | Marron |
| 11 | 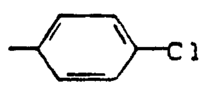 | Marron |
| 12 | 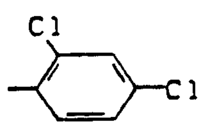 | blaustichiges Rot |
| 13 | 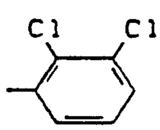 | blaustichiges Rot |
| 14 | 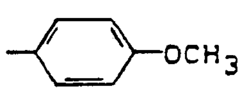 | Violett |
| 15 | 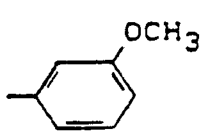 | Violett |
| 16 | 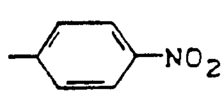 | Braun |
| 17 | 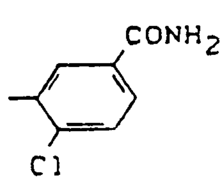 | Rot |

| | | |
|---|---|---|
| 18 | 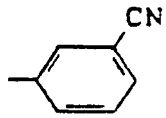 | gelbstichiges Rot |
| 19 | 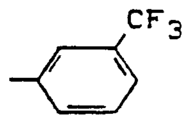 | gelbstichiges Rot |
| 20 | 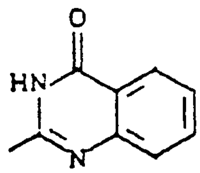 | blaustichiges Rot |
| 21 | 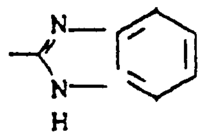 | Schwarz |

Verfährt man nach den Angaben von Beispiel 1 und verwendet in entsprechenden Mengen substituierte Aldehyde des β-Oxynaphthoesäureanilids, erhält man die in der folgenden Tabelle aufgeführten Pigmente mit den angegebenen Farbtönen.

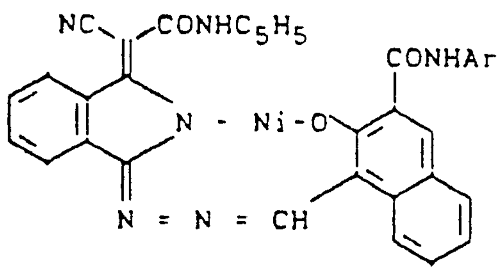

| Beispiel | Ar | Farbton |
|---|---|---|
| 22 | 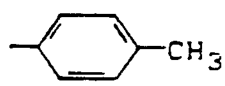 | Rot |
| 23 | 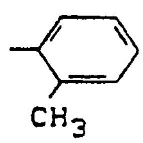 | blaustichiges Rot |
| 24 | 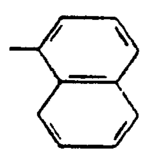 | Bordo |
| 25 | 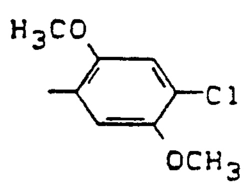 | Violett |
| 26 | 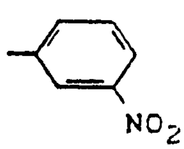 | Rot |
| 27 | 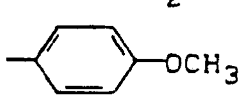 | Rot |

| | | |
|---|---|---|
| 28 | 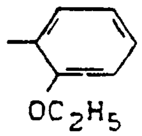 | blaust. Rot |
| 29 | 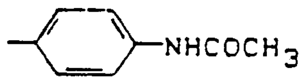 | blaust. Rot |

**Beispiel 30** (Anwendungsbeispiel)

4 g feingemahlenes Pigment gemäß Beispiel 1 werden in 92 g eines Einbrennlackes folgender Zusammensetzung dispergiert:

33 % Alkydharz
15 % Melaminharz
5 % Glykolmonomethylether
34 % Xylol
13 % Butanol

Als Alkydharz kommen Produkte auf Basis synthetischer und pflanzlicher Fettsäuren wie Kokosöl, Rizinusöl, Ricinenöl, Leinöl u.a. in Frage. Anstelle von Melaminharzen können Harnstoffharze verwendet werden.

Nach erfolgter Dispergierung wird der pigmentierte Lack auf Papier-, Glas-, Kunststoff- oder Metall-Folien aufgetragen und 30 Minuten bei 130°C eingebrannt, wobei man eine brillante marronfarbene Lackierung erhält.

**Beispiel 31** (Anwendungsbeispiel)

6 Teile Pigment nach Beispiel 1 werden in 12 Teilen Xylol, 4,1 Teilen Butylacetat und 0,7 Teilen n-Butanol mit 22,5 Teilen einer 20-%-igen Lösung von Celluloseacetobutyrat in Butylacetat/Xylol (2 : 1) 30 Minuten im Red Devil mit 2 - 3 mm Glaskugeln dispergiert. Nach Auffetten durch Zusatz von 10 Teilen eines gesättigten Polyesterharzes (Dynapol H 700) 7,3 Teilen Melaminharz, 8,7 Teilen einer 20-%-igen Lösung von Celluloseacetobutyrat in Butylacetat/Xylol (2 : 1), 18 Teilen Butylacetat, 1,6-Teilen n-Butanol und 9,7 Teilen Xylol wird nochmals 5 Minuten dispergiert.

Zu diesem Lack setzt man eine Dispersion von Aluminiumpaste (60 %) in einem organischen Lösungsmittel (ca. 1 : 2) in der Menge zu, daß das Verhältnis Pigment : Al zwischen 80 : 20 und 1 : 99 zu liegen kommt.

Dieser Lack wird aufgestrichen und nach dem Trocknen mit einem Klarlack auf Basis Acrylat/Melaminharz, der weitere Hilfsmittel wie z. B. UV-Absorber enthalten kann, überzogen und eingebrannt.

Man erhält eine marronfarbene Metalliclackierung mit brillanten Farbton und ausgezeichneter Wetterechtheit.

**Beispiel 32**

0,2 g des nach Beispiel 1 erhaltenen Pigmentes werden bei 160°C auf einem Mischwalzwerk in 65 g stabilisiertem PVC und 35 g Diisooctylphthalat dispergiert und bei 160°C ausgewalzt. Man erhält eine marronfarbene Folie von sehr guter Licht- und Migrationsechtheit.

**Patentansprüche**

1. Pigmente der Formel

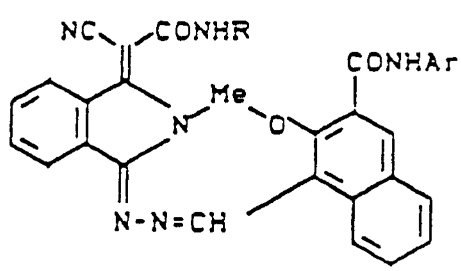

I

in der

Me = Zn, Cu, Co, bevorzugt Ni,

R = Alkyl, Cycloalkyl, Aralkyl, Aryl, Hetaryl, wobei die genannten Reste substituiert sein können,

Ar = gegebenenfalls substituiertes Aryl.

2. Pigmente gemäß Anspruch 1 der Formel I, in der

R = $C_1$-$C_6$-Alkyl, $C_3$-$C_7$-Cycloalkyl, Phenyl- und Naphthyl-$C_1$-$C_4$-alkyl, Phenyl, Naphthyl, wobei die Arylreste durch Halogen wie Cl, Br, F, -$NO_2$, -CN, -$CF_3$, $C_1$-$C_4$-Alkyl, $C_1$-$C_4$-Alkoxy, Carbamoyl, Mono- und Di-$C_1$-$C_4$-alkylcarbamoyl, $C_1$-$C_4$-Alkylamino substituiertsein können, Benzimidazol-2-yl, Benzthiazol-2-yl, 4-Chinazolon-2-yl.

3. Pigmente gemäß den Ansprüchen 1 - 2, bei denen Ar für Phenyl, α-Naphthyl, 2-Nethylphenyl, 4-Methylphenyl, 3-Nitrophenyl, 2,5-Dimethoxy-4-chlorphenyl, 2,5-Dimethoxyphenyl, 4-Chlorphenyl, 2,4-Dimethoxy-5-chlorphenyl, 2-Methyl-5-chlorphenyl, 2-Methoxyphenyl, 2,4-Dimethylphenyl, 2-Ethoxyphenyl, 2-Methyl-4-chlorphenyl, 4-Acetylaminophenyl steht.

4. Pigment der Formel

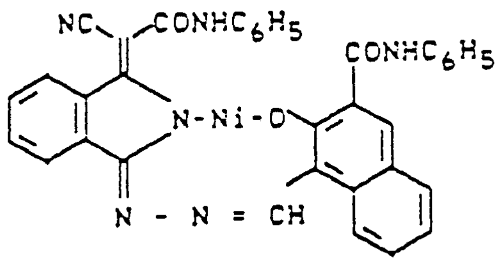

5. Pigment der Formel

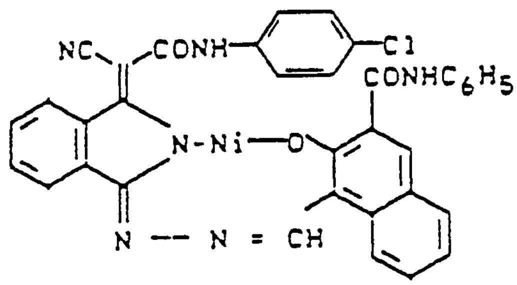

6.Pigment der Formel

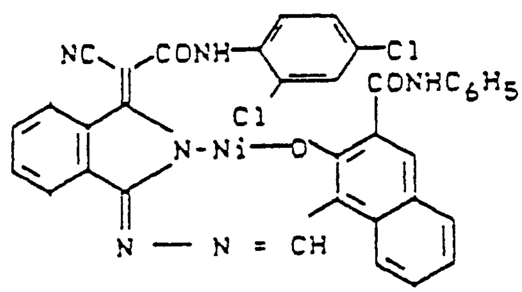

7. Pigment der Formel

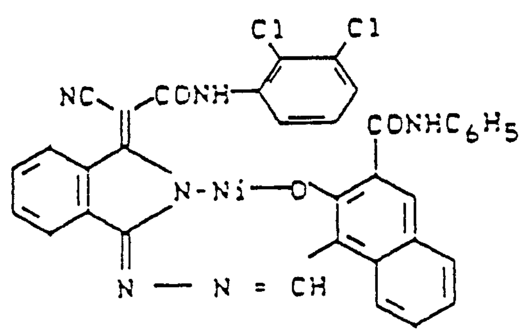

8. Verfahren zum Pigmentieren von makromolekularen organischen Stoffen, dadurch gekennzeichnet, daß man Pigmente gemäß den Ansprüchen 1 - 7 verwendet.

9. Verfahren zum Pigmentieren von Automobillacken, dadurch gekennzeichnet, daß man Pigmente gemäß den Ansprüchen 1 - 7 vewendet.

## Claims

1. Pigments of the formula

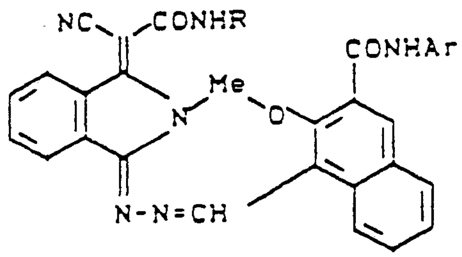

I

in which
Me = Zn, Cu, Co and preferably Ni,
R = alkyl, cycloalkyl, aralkyl, aryl and hetaryl, where the mentioned radicals can be substituted, and
Ar = optionally substituted aryl.

2. Pigments, according to Claim 1, of the formula I, in which
R = $C_1$-$C_6$-alkyl, $C_3$-$C_7$-cycloalkyl, phenyl- and naphthyl-$C_1$-$C_4$-alkyl, phenyl, naphthyl, where the aryl radicals can be substituted by halogen, such as Cl, Br or F, -$NO_2$, -CN, -$CF_3$, $C_1$-$C_4$-alkyl, $C_1$-$C_4$-alkoxy, carbamoyl, mono- and di-$C_1$-$C_4$-alkyl-carbamoyl or $C_1$-$C_4$-alkylamino, benzimidazol-2-yl, benzthiazol-2-yl or 4-quinazolon-2-yl.

3. Pigments according to Claims 1 - 2, in which Ar represents phenyl, α-naphthyl, 2-methylphenyl, 4-methylphenyl, 3-nitrophenyl, 2,5-dimethoxy-4-chlorophenyl, 2,5-dimethoxyphenyl, 4-chlorophenyl, 2,4-dimethoxy-5-chlorophenyl, 2-methyl-5-chlorophenyl, 2-methoxyphenyl, 2,4-dimethylphenyl, 2-ethoxyphenyl, 2-methyl-4-chlorophenyl and 4-acetylaminophenyl.

4. Pigment of the formula

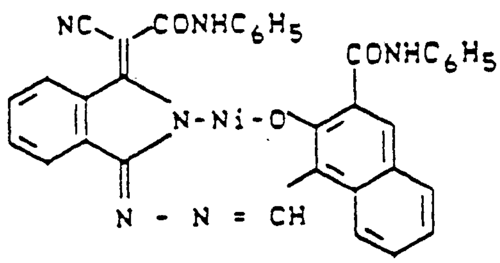

5. Pigment of the formula

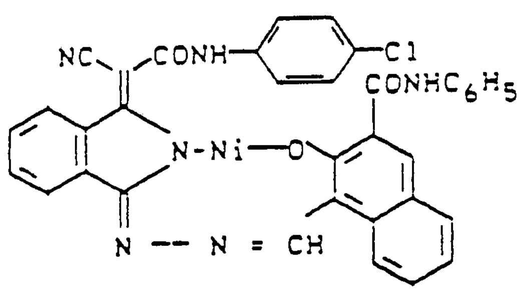

6. Pigment of the formula

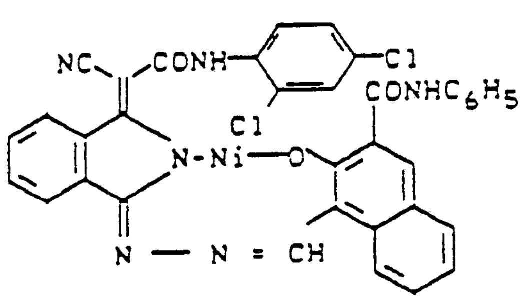

7. Pigment of the formula

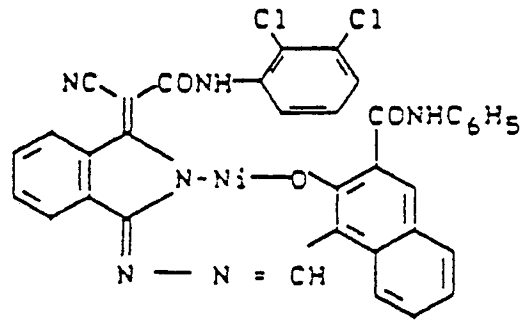

8. Process for the pigmentation of macromolecular organic substances, characterized in that pigments according to Claims 1 - 7 are used.

9. Process for the pigmentation of automotive paints, characterized in that pigments according to Claims 1 - 7 are used.

## Revendications

1. Pigments de formule

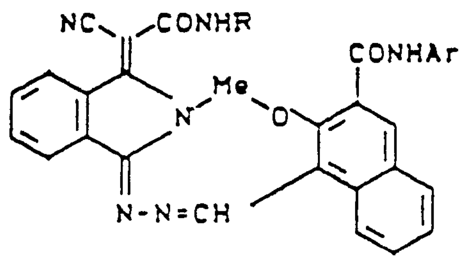

I

dans laquelle

Me représente Zn, Cu, Co, de préférence Ni,

R représente un reste alkyle, cycloalkyle, arylalkyle, aryle ou hétéroaryle, les restes cités pouvant être substitués,

Ar représente un reste aryle éventuellement substitué.

2. Pigments selon la revendication 1, de formule I dans laquelle

R représente un reste alkyle en $C_1$-$C_6$, cylcloalkyle en $C_3$-$C_7$, phényl- ou naphtyl-alkyle en $C_1$-$C_4$, phényle ou naphtyle, les restes aryles pouvant être substitués par un halogène tel que Cl, Br ou F, $-NO_2$, $-CF_3$, alkyle en $C_1$-$C_4$, alcoxy en $C_1$-$C_4$, carbamoyle ou mono- ou di-(alkyle en $C_1$-$C_4$)-carbamoyle, ou un reste benzimidazole-2-yle, benzothiazole-2-yle ou 4-quinazolone-2-yle.

3. Pigments selon les revendication 1 - 2, dans lesquels Ar représente un reste phényle, α-naphtyle, 2-méthylphényle, 4-méthylphényle, 3-nitrophényle, 2,5-diméthoxy, 4-chlorophényle, 2,5-diméthoxyphényle, 4-chlorophényle, 2,4-diméthoxy-5-chlorophényle, 2-méthyl-5-chlorophényle, 2-méthoxyphényle, 2,4-diméthyl-phényle, 2-éthoxyphényle, 2-méthyl-4-chlorophényle ou 4-acétylaminophényle.

4. Pigment de formule

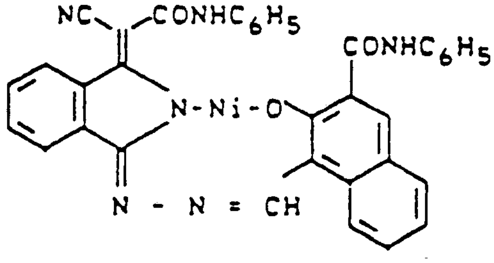

5. Pigment de formule

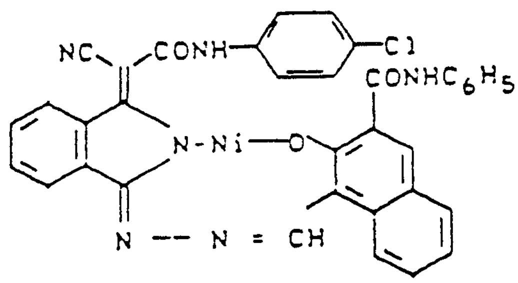

6. Pigment de formule

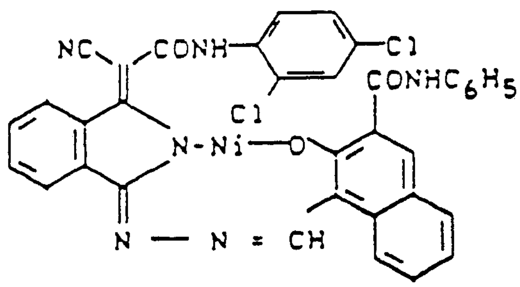

7. Pigment de formule

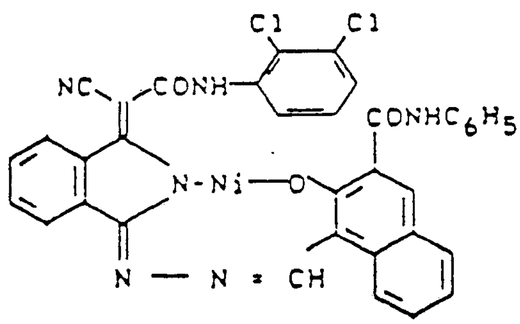

8. Procédé pour la pigmentation de matières organiques macromoléculaires, caractérisé en ce que l'on utilise des pigments selon les revendications 1 - 7.

9. Procédé pour la pigmentation de peintures pour automobiles, caractérisé en ce que l'on utilise des pigments selon les revendications 1 - 7.